(19) **Europäisches Patentamt**

**European Patent Office**

**Office européen des brevets**

(11) **EP 1 525 280 B1**

(12) **EUROPEAN PATENT SPECIFICATION**

(45) Date of publication and mention
of the grant of the patent:
**01.03.2006 Bulletin 2006/09**

(51) Int Cl.:
***C09G 1/16*** (2006.01)

(21) Application number: **03771640.4**

(86) International application number:
**PCT/US2003/022316**

(22) Date of filing: **17.07.2003**

(87) International publication number:
**WO 2004/011567 (05.02.2004 Gazette 2004/06)**

(54) **AQUEOUS RESIN DISPERSION FOR FLOORS, AND FLOOR POLISH USING SAME**

WÄSSRIGE HARZDISPERSION FÜR FUSSBODEN, UND DEREN VERWENDUNG IN FUSSBODENPOLITUR

DISPERSION DE RESINE AQUEUSE POUR SOLS, ET ENCAUSTIQUE CONTENANT UNE TELLE DISPERSION

(84) Designated Contracting States:
**AT BE BG CH CY CZ DE DK EE ES FI FR GB GR HU IE IT LI LU MC NL PT RO SE SI SK TR**

(30) Priority: **29.07.2002 JP 2002220357**

(43) Date of publication of application:
**27.04.2005 Bulletin 2005/17**

(73) Proprietor: **JohnsonDiversey, Inc.
Sturtevant, WI 53177-0902 (US)**

(72) Inventors:
 • **KOKETSU, A.,**
  **c/o Johnson Professional KK**
  **Naka-ku**
  **,Yokohama City,Kanagawa 231-8691 (JP)**
 • **FUNAKI, H.,**
  **c/oJohnson Professional KK**
  **Naka-ku**
  **,Yokohama City,Kanagawa 231-8691 (JP)**
 • **NAKAMURA, T.,**
  **c/o Johnson Professional KK**
  **Naka-ku**
  **,Yokohama City,Kanagawa 231-8691 (JP)**

(74) Representative: **Ruschke, Hans Edvard et al
RUSCHKE HARTMANN MADGWICK & SEIDE
Patent- und Rechtsanwälte
Pienzenauerstrasse 2
81679 München (DE)**

(56) References cited:
 **EP-A- 0 879 852     US-A- 4 347 333
 US-A- 5 356 968**

**Description**

BACKGROUND OF THE INVENTION

1. Field of the Invention

The present invention relates to an aqueous resin dispersion for floors and a floor polish composition using same.

2. Description of the Related Art

Floor polish compositions have been used on floor surfaces of wood floor materials, chemical floor materials composed of synthetic resins, concrete or stone such as marble to preserve the beauty of the floor material and to protect the floor surface. Floor polish compositions are generally of oily type using solvents and of aqueous or emulsified composition type.

The classification of floor polish compositions is provided in the section Definition of Terms in Testing Methods for Floor Polishes, General Rules, in "JFPA (Japan Floor Polish Association) Standard - 00".

Among the floor polishes mentioned in the standard, aqueous polymer-type compositions have been most widely used as polishing agents for floors. Specific examples of aqueous polymer type floor polishes have been disclosed in Japanese Patent Publications Nos. S44-24407 and S49-1458, Cosmetic Chemical Specialties, 61(9), 86 (1985), and those polishes comprised acrylic copolymer emulsions, polyethylene wax emulsions, alkali solubilizable resins, plasticizers, and other components.

Japanese Patent Publications Nos. S47-14019 and S47-15597 disclosed floor polish compositions using polyvalent metal compounds and suitable for wood floor materials, chemical floor materials composed of synthetic resins, and floor surfaces from concrete or stone such as marble. The polyvalent metal compounds in this case included heavy metals such as zinc, cobalt, cadmium, nickel, chromium, zirconium, tin, tungsten and aluminum, and floor polish compositions in which the metals formed complexes with amines or ammonia have been disclosed.

Floor polish composition using no such complexes have also been suggested. For example, Japanese Patent Publication No. S60-48542 suggested a method for dispersing zinc oxide in a copolymer emulsion, instead of using metal complexes. This method comprises a step of dispersing zinc oxide, for example, by stirring and mixing, in an emulsion containing an acrylic copolymer, thereby making it possible to obtain a floor polish composition with good stability and releasing no amine odor during drying.

The above-mentioned polyvalent metal compounds have been added to improve endurance, water resistance, and removability of floor polish compositions. However, as concerns about environmental pollution have been growing in recent years, a demand was created for floor polish compositions which are not directly related to environmental problems such as water contamination if handled under appropriate control, such compositions containing no polyvalent metal compounds (heavy metals) to prevent any possibility of such compositions becoming the negative factors in terms of environmental pollution and safety.

Furthermore, because there is a risk that using zinc oxide will also cause environmental pollution with a heavy metal, an attempt was made to use calcium as a metal crosslinking agent. For example, Japanese Patent Application Laid-open No. H8-92529 disclosed a floor polish composition using calcium as a metal crosslinking agent. However, in compositions in which a crosslinking agent was simply replaced with calcium, a film could not be provided with sufficient endurance and wear resistance comparable with those of the films obtained by metal crosslinking employing zinc that has usually been used, and in accordance with the above-mentioned inventions, the insufficiency in endurance and wear resistance was compensated by causing a crosslinking reaction of an aqueous polyurethane resin and a calcium compound.

Furthermore, aqueous coating compositions containing no metal crosslinking agents at all have also been suggested. For example, in accordance with Japanese Patent Application Laid-open No. 2001-2980, endurance was increased by adding 0.1-100 wt.% amine compound to 100 wt.% (solids) aqueous dispersion of a copolymer with a glass transition temperature of no more than 80°C. However, with this method, when the polish was overcoated, amines penetrated into the film of prime polish layer, thereby making it impossible to obtain sufficient gloss. Another drawback was that the viscosity was increased degrading the coating processability.

Japanese Patent Application Laid-open No. 2000-290596 disclosed a polishing agent composition for floors using a vinyl monomer with an alicyclic structure. However, the specifically disclosed polymer contained a large amount of styrene and the disclosed compositions required metal crosslinking. The problem associated with a floor polish composition produced by conducting metal crosslinking of such a polymer containing a large amount of styrene was that the film obtained could not be removed to a sufficient degree with a neutral stripping agent and had a limited usage.

It has been widely believed that among all the alicyclic vinyl monomer units that have been used in the conventional aqueous resin dispersions for floors, styrene was a monomer unit indispensable for providing the coated film with gloss. In recent years, the issues of sick house and sick school syndromes caused by construction materials have been raised and a research has been started of the effect produced by unreacted styrene monomer contained in a very small amount in styrene copolymers used in the floor polish compositions, in comparison with the indicators provided by the government, and whether this effect can pose a problem.

On the other hand, there have been many reports that the air inside the rooms in contemporary buildings was polluted with chemical substances due to a high degree of air tightness or because construction or trimming materials releasing chemical substances were used, in particular, in new or renovated buildings, this pollution causing a variety of physical disorders in the inhabitants.

The symptoms (called "sick house symptoms") vary among the patients, many aspects of the disorders, beginning with patterns of symptom appearance, are not clear and a variety of complex factors have been also considered.

Typical examples of the factors causing the sick house symptoms include release of chemical substances from construction materials such as finishing materials, including vinyl chloride wallpaper, plywood for ceilings and floors, thermally insulating materials, paints, articles for daily use such as furniture, carpets, curtains, combustion gases from kitchen equipment, heating equipment, building design and construction methods such as methods protecting structures from ants.

The main symptoms include skin irritation, eye pain, sore throat, headache, dizziness, and nausea. Some patients have breathing difficulty.

Further, if a person became hypersensitive after initial exposure to a certain dose of chemical substances or after long-term exposure to low-concentration chemical substances, he or she can thereafter demonstrate hypersensitivity ("chemical substance hypersensitivity") even with respect to extremely small amounts of chemical substances of the same system.

From among the chemical substances demonstrating a high degree of pollution in indoor air, the Ministry of Health, Labor, and Welfare of Japan on December 22, 2000, has selected the following eight chemical substances: "formaldehyde, toluene, xylene, paradichlorobenzene, ethylbenzene, styrene, chloropyriphos, and di-n-butyl phthalate", on July 25, 2001, added the following three substances: "tetradecane, di-2-ethylhexyl phthalate, and diazinone" and presented guideline values for indoor concentration of each of those substances. The guideline values have been set in accordance with the decision based on the presently available scientific information that no detrimental effect will be produced on the health even if a person is exposed throughout his/her life to those chemical substances at a concentration thereof of no higher than the guideline value (however, formaldehyde has been indicated to be toxic even in a short-period exposure).

As for the object of providing those guideline values, it was expected that they will make a contribution to the improvement of independent residential housing structures, designs, and specifications, for example, by preventing those involved in the residential housing construction industry from using substances for which the guideline values may be exceeded in the products such as building materials, thereby enhancing the reduction of indoor concentration of volatile organic compounds (VOC, organic compounds that are evaporated at normal temperature; most of them have a boiling point of 25-50°C) and ensuring safe and pleasant residential environment.

Against this background, a demand arose for floor polish compositions with a small content ratio of styrene as a monomer unit and floor polish compositions containing substantially no styrene, those compositions retaining the gloss of the conventional coating films.

On the other hand, monolayer flooring using solid sheets, composite flooring with plywood, aggregated materials, or single-sheet laminates as a base sheet covered on the surface thereof with decorative layers of natural wood or decorative paper obtained by special processing (printing), soundproofing flooring (wood flooring; a general term relating to sheets subjected to processing for application to floors, including the above-described flooring) have been actively introduced in recent years in general residential housing industry with the object of reducing house dust.

A problem associated with the maintenance of such flooring was that the floor full-maintenance methods such as used for businesses have not spread into the field of residential housing and, actually, the maintenance methods designed for businesses cannot be easily introduced in residential housing. As a result, sufficient and appropriate maintenance and control cannot be performed. In particular, the flooring (wood flooring) in general residential housing is often used in places where water is used, for example, in the kitchens, dining rooms, living rooms, washing spaces and dressing rooms, and floor polish compositions for homes are required to have a high resistance to water and stains.

Maintenance troubles associated with flooring are due to the fact that resin-based floor polishes are coated repeatedly over a long time. Therefore, a coating film of an unnecessary large thickness is formed which can reduce the film strength or render a state in which stripping is difficult.

Furthermore, there are cases in which warping or tearing of flooring results from using a large quantify of detergents and water, and cases in which improper adhesion and powdering of floor polishes and slippery state of floors is caused by the problems associated with the application method.

The merits of wood floors are the beauty of wood texture, its softness to touch, small weight and high processability. On the other hand, because wood is a porous material, it is sensitive to moisture and humid air, and deforms, cracks, warps, and shrinks because it can expand on adsorbing water and shrink on drying.

Thus, because wood is greatly affected by water, the amount of water used during maintenance should be minimized and quick operations taking little time have to be conducted.

Furthermore, acidic or alkaline detergents not only cause swelling and shrinking of wood but also induce discoloration when penetrate deeply thereinto. As a result, the beauty inherent to wood is lost. Required in the field of flooring maintenance are the maintenance control methods providing for appropriate removal of stains and a high level of safety, sanitary, and cleanliness, and producing no adverse effect on the flooring (wood flooring) beauty, and floor polish compositions suitable for such methods.

## SUMMARY OF THE INVENTION

It is an object of the present invention to provide an aqueous resin dispersion for floors which demonstrates sufficient utility in floor polish compositions containing substantially no styrene as a monomer unit and using no metal crosslinking. Another object of the present invention is to provide a floor polish composition which has excellent gloss, black heel mark (BHM) resistance, scuff resistance, and storage stability and in particular has removability, adhesive properties, stain resistance, and water resistance.

The results of the comprehensive study conducted by the inventors have demonstrated that the above-described objects can be attained by using a specific combination of monomers. This finding led to the creation of the present invention.

Thus, the present invention, in accordance with the first aspect thereof, provides an aqueous resin dispersion for floors in which a copolymer comprising the monomer units (a), (b), and (c) as the structural units is dispersed in water, wherein the content ratios of each monomer in the aqueous resin dispersion for floors, based on the total amount of all the monomers, are:

(a) 1 to 70 wt.% vinyl monomer units with an alicyclic structure;
(b) 5 to 50 wt.% vinyl monomer units with carboxyl groups; and
(c) 5 to 90 wt.% non-aromatic vinyl monomer units other than (a) and (b) above. In accordance with the second aspect of the present invention, there is provided the above-described aqueous resin dispersion for floors wherein the monomer unit (a) comprises at least one compound selected from cyclohexyl methacrylate and cyclohexyl acrylate.

From a different standpoint, in accordance with the third aspect of the present invention, there is provided a floor polish composition comprising an aqueous resin dispersion for floors in which a copolymer comprising the monomer units (a), (b), and (c) as the structural units is dispersed in water, wherein the content ratios of each monomer in the aqueous resin dispersion for floors, based on the total amount of all the monomers, are:

(a) 1 to 70 wt.% vinyl monomer units with an alicyclic structure;
(b). 5 to 50 wt.% vinyl monomer units with carboxyl groups; and
(c) 5 to 90 wt.% non-aromatic vinyl monomer units other than (a) and (b) above, and

the copolymer is not metal crosslinked. In accordance with the fourth aspect of the present invention, there is provided a floor polish composition wherein the above-described aqueous resin dispersion for floors comprises at least one compound selected from cyclohexyl methacrylate and cyclohexyl acrylate as the monomer component (a) . In accordance with the fifth aspect of the present invention, there is provided the floor polish composition, wherein the glass transition temperature (Tg) of the aqueous resin dispersion for floors is 40-115°C and the acid value (Av) thereof is 60-150. In particular, in accordance with the sixth aspect of the present invention, there is provided the floor polish composition which is used for flooring.

The aqueous resin dispersion for floors in accordance with the present invention and the floor polish composition using same are preferably used on plastic floors such as vinyl-based or synthetic resin-coated floors, stone floors, cement floors and flooring (wood floors). The floor polish composition in accordance with the present invention has excellent gloss, black heel mark (BHM) resistance, scuff resistance, and storage stability, can be readily stripped within a short time by using neutral stripping detergents, without using alkaline stripping detergent compositions, and when coated on flooring, has excellent stain resistance, for example, to condiments and detergents used in kitchens, thereby preventing the floor from damage. In particular, though the aqueous resin dispersion for floors contains substantially no aromatic vinyl monomers, the floor polish composition in accordance with the present invention has good removability, stain resistance, and water resistance. Further, the dispersion has no effects such as sick house syndrome, and because no metal crosslinking is used, the dispersion has excellent environmental safety.

The preferred embodiment of the present invention will be described hereinbelow in detail.

DESCRIPTION OF THE PREFERRED EMBODIMENTS

The aqueous resin dispersion for floors in accordance with the.present invention is composed of (a) vinyl monomer units with an alicyclic structure, (b) vinyl monomer units with carboxyl groups, and (c) non-aromatic vinyl monomer units other than (a) and (b) above and contains substantially no aromatic vinyl monomers.

Examples of vinyl monomer units having alicyclic structure, which are the component (a) of the aqueous resin dispersion for floors in accordance with the present invention, include cyclohexyl methacrylate, cyclohexyl acrylate, isobornyl methacrylate, isobornyl acrylate. Among them, at least one compound selected from cyclohexyl methacrylate and cyclohexyl acrylate is preferably elected because such a selection allows the coating film with excellent gloss and endurance to be formed on the substrate surface and also allows the stripping operation to be conducted easily with a neutral stripping agent when the coating film has to be removed.

The vinyl monomer with an alicyclic structure, which is the component (a), is composed of one or more types of the above-described monomer units and is mixed and copolymerized with other monomers at a ratio of 1-70 wt.%, preferably 5-60 wt.%, in the aqueous resin dispersion for floors. If the ratio of component (a) is less than 1 wt.%, the adhesive properties are degraded, and if it is above 70 wt.%, polymerization sometimes becomes difficult.

Further, examples of the vinyl monomer with a carboxyl group, which is the component (b) of the aqueous resin dispersion for floors in accordance with the present invention, include acrylic acid, methacrylic acid, crotonic acid, itaconic acid, fumaric acid, maleic acid, monomethyl itaconate, monomethyl fumarate, monobutyl fumarate, itaconic acid, citraconic acid, maleic anhydride. Among them, acrylic acid and methacrylic acid are preferred because of low cost thereof and good copolymerization ability with other monomers.

The vinyl monomer with a carboxyl group, which is the component (b), is composed of one or more types of the above-described monomer units and is mixed and copolymerized with other monomers at a ratio of 5-50 wt.%, preferably, 9-25 wt.%, in the aqueous resin dispersion for floors. If the ratio of component (b) is less than 5 wt.%, endurance and removability are degraded, and if it is above 50 wt.%, the coating film has poor resistance to water and stain resistance.

Examples of the nonaromatic vinyl monomer, other that the above-described (a) and (b) monomers, which is the component (c) of the aqueous resin dispersion for floors in accordance with the present invention, include (meth) acrylic acid esters such as methyl methacrylate, methyl acrylate, ethyl methacrylate, ethyl acrylate, isopropyl methacrylate, isopropyl acrylate, n-butyl methacrylate, n-butyl acrylate, isobutyl methacrylate, isobutyl acrylate, octyl methacrylate, octyl acrylate, 2-ethylhexyl methacrylate, 2-ethylhexyl acrylate, lauryl methacrylate, lauryl acrylate, hydroxyethyl methacrylate, hydroxyethyl acrylate, hydroxypropyl methacrylate, hydroxypropyl acrylate, hydroxybutyl methacrylate, hydroxybutyl acrylate, hydroxypolyoxyethylene methacrylate, hydroxypolyoxyethylene acrylate, hydroxypolyoxypropylene methacrylate, hydroxypolyoxypropylene acrylate, hydroxypolyoxybutylene methacrylate, hydroxypolyoxybutylene acrylate, vinyl methacrylate, vinyl acrylate, allyl methacrylate and allyl acrylate, vinyl monomers other than (meth) acrylic acid esters, dienes such as butadiene, chloroprene and isoprene, vinyl esters such as vinyl acetate vinyl chloride, vinylidene chloride, methacrylonitrile, acrylonitrile and N-vinyl pyrrolidone. From the standpoint of endurance and weather resistance the preferred among them are methyl methacrylate, methyl acrylate, n-butyl methacrylate, n-butyl acrylate, 2-ethylhexyl acrylate, ethyl acrylate, ethyl methacrylate, isobutyl acrylate, and isobutyl methacrylate.

The non-aromatic vinyl monomer, other than the above-described components (a) and (b), which is the component (c), is composed one or more types of the above-described monomer units and is mixed and copolymerized with other monomers at a ratio of 5-90 wt.%, preferably, 30-85 wt.%, in the aqueous resin dispersion for floors. If the ratio of component (c) is above 90 wt.%, the balance of water resistance and endurance is poor.

On the other hand, styrene, α-methylstyrene, 4-methylstyrene, 2-methylstyrene, 3-methylstyrene, 4-methoxystyrene, 2-hydroxymethylstyrene, 4-ethylstyrene, 4-ethoxystyrene, 3,4-dimethylstyrene, 2-chlorostyrene, 3-chlorostyrene, 4-chloro-3-methylstyrene, 4-t-butylstyrene, 2,4-dichlorostyrene, 2,6-dichlorostyrene, 1-vinylnaphthalene, divinylbenzene, benzyl methacrylate, benzyl acrylate, which are aromatic vinyl monomers, are substantially not contained as the structural units of the copolymer of the aqueous resin dispersion for floors in accordance with the present invention.

The aqueous resin dispersion for floors in accordance with the present invention is preferably prepared by employing a well-known emulsion polymerization method using the below described emulsifiers and polymerization initiators.

Examples of suitable emulsifiers include anionic surfactants such as sodium alkylbenzene sulfonates, sodium alkyl sulfates, sodium polyoxyethylene alkylphenyl ether sulfates, sodium polyethylene alkyl sulfates, sodium dialkyl sulfosuccinates and formalin condensate of naphthalenesulfonic acid, nonionic surfactants, such as polyoxyethylene alkyl ethers, polyoxyethylene alkylphenyl ethers, polyethylene glycol fatty acid esters and sorbitan fatty acid esters, reactive emulsifiers such as sodium styrene sulfonate, sodium alkylallyl sulfonates, sodium alkylallyl sulfosuccinates, polyoxyethylene alkylallyl glycerin ether sulfate and polyoxyethylene alkylphenol alkyl glycerin ether sulfate, polymer surfactants such as polyvinyl alcohol, polyacrylic acid, watersoluble (meth)acrylic acid ester copolymers, styrene - maleic acid copolymer and salts thereof, styrene - (meth) acrylic acid copolymer and salts thereof and poly (meth) acrylamide copolymer. Those components may be used individually or in combinations of two or more thereof. The preferred quantity of the emulsifier used is usually 0.05-5 parts by weight per 100 parts by weight of the monomers. If the quantity of the emulsifier used is less than 0.05 part by weight, the emulsifier has a poor emulsifying ability. On the other hand, if the quantity if above 5 parts by weight, water resistance can be insufficient.

Examples of suitable polymerization initiators include peroxodisulfates such as potassium peroxodisulfate, ammonium peroxodisulfate and sodium peroxodisulfate, and peroxides such as hydrogen peroxide, benzoyl peroxide and t-butyl hydroxyperoxide. Those initiators may be used as a redox system also using a reducing agent such as sodium bisulfite, sodium pyrobisulfite, ascorbic acid and sodium formaldehyde sulfoxylate.

The polymerization reaction temperature is preferably 20-95°C, more preferably, 40-90°C. The polymerization time is preferably 1-10 hours.

In the aqueous resin dispersion for floors in accordance with the present invention, the glass transition temperature of the copolymer is preferably 10-115°C, more preferably, 40-155°C. When the glass transition temperature of the copolymer is below 10°C, blocking easily occurs in the coating film, and when the glass transition temperature exceeds 115°C, film forming ability at normal temperature is degraded.

Therefore, when the aqueous resin dispersion for floors is designed it is preferred that one or more types of each of the above-described monomer units (a), monomer units (b), and monomer units (c) be selected such as to set the glass transition temperature (Tg) of the obtained copolymer within the above-described range. The glass transition temperature (called Tg hereinbelow) as referred to in the description of the present invention can be found from the Fox formula 1 shown below.

$$1/Tg = W1/Tg1 + W2/Tg2 + W3/Tg3 \dots$$

where W1, W2, W3, ... are weight ratios of monomer units 1, 2, 3 in the polymer, and Tg1, Tg2, Tg3 ... are glass transition temperatures (in the above formula, absolute temperatures are used) of the homopolymers of those monomer units 1, 2, 3 ... .

In the above formula, values presented in polymer handbooks can be used for the glass transition temperature (Tg) of homopolymers. For example, poly(methyl methacrylate): 105°C, poly(n-butyl acrylate): -54°C, poly(2-ethylhexyl acrylate): -50°C, poly(cyclohexyl acrylate): 19°C, polymethacrylic acid: 228°C, poly(cyclohexyl methacrylate) :66°C, polyacrylic acid: 106°C, polystyrene: 100°C.

The aqueous resin dispersion for floors in accordance with the present invention can be used as an aqueous dispersion with a concentration of solids of 10-70 wt.% and can be added to the floor polish composition for floors in accordance with the present invention within a range of 10-60 wt.% as solids.

The floor polish composition for floors in accordance with the present invention is composed by using components such as a plasticizer, a film formation enhancing agent, an alkali solubilizable resin, a slip-regulating agent, a wettability-improving agent, which are the well-known components, in addition to the above-described aqueous resin dispersion for floors.

Examples of suitable plasticizers include citric acid esters such as acetyltributyl citrate, phosphoric acid esters such as tributyl phosphate, tri-2-ethylhexyl phosphate, triphenyl phosphate, tricresyl phosphate and tributoxyethyl phosphate, aliphatic dibasic acid esters such as dibutyl adipate, di-2-ethylhexyl adipate, di-n-alkyl (C6-10) adipate, di-2-ethylhexyl azelaate, dibutyl sebacate and di-2-ethylhexyl sebacate, isobutyl ester derivatives of pentadiol and chlorinated paraffin.

Examples of film formation enhancing agents include alcohols such as ethanol, isopropyl alcohol, and polyhydric alcohols such as ethylene glycol, glycol ethers such as diethylene glycol monomethyl ether, diethylene glycol monoethyl ether, dipropylene glycol monomethyl ether, dipropylene glycol monoethyl ether, ethylene glycol mono-2-methylhexyl ether, diethylene glycol mono-2-ethylhexyl ether, and amine compounds such as α-amino alcohol, β-amino alcohol diethanolamine, triethanolamine, 2-aminoisohexyl alcohol, N,N-diethylethanolamine, N,N-dimethylethanolamine, aminoethylethanolamine, N-methyl-N,N-diethanolamine, N,N-butylethanolamine, N-methylethanolamine and 3-amino-1-propanol.

However, in order to provide for a higher environmental safety, it is preferred that the amine compounds be compounded in a small amount or be substantially not compounded.

Examples of suitable alkali solubilizable resins include diisobutylene - maleic anhydride copolymer, rosin-modified maleic acid, (meth)acrylic acid ester - (meth) acrylic acid copolymer and shellac. Those can be optionally used in the floor polish composition in accordance with the present invention.

Examples of slip-regulating agents include vegetable waxes such as candelilla wax, carnauba wax, rice wax, Japan wax and jojoba oil, animal waxes such as beeswax, lanolin and whale tallow, mineral waxes such as montana wax, ozokerite and ceresin, petroleum waxes such as paraffin wax, microcrystalline wax and petrolatum, synthetic hydrocarbon waxes such as Fischer-Tropsch wax, and synthetic waxes such as (oxidized) polyethylene wax and (oxidized) polypropylene wax.

Examples of suitable wettability-improving agents include fluorine-containing surfactants, silicone-type surfactants, anionic surfactants such as higher alcohol sulfuric acid ester sodium, sodium alkylbenzene sulfonate, sodium succinic acid dialkyl ester sulfonate, sodium, alkyldiphenyl ether sulfonate, polyoxyethylene alkyl sulfuric acid ester sodium, polyoxyethylene alkylphenyl ether sulfuric acid ester sodium and sodium alkanesulfonates, polyoxyethylene alkyl ethers, polyoxyethylene polyoxypropylene alkyl ethers, polyoxyethylene polyoxypropylene copolymers, fatty acid esters such as sucrose fatty acid esters, sorbitan fatty acid esters, polyethylene glycol fatty acid esters and polyglycerin fatty acid esters, fatty acid alkanolamides such as coconut oil fatty acid diethanolamide, lauric acid diethanolamide, lauric acid myristic acid diethanolamide, myristic acid diethanolamide, oleic acid diethanolamide and palm kernel oil diethanolamide, nonionic surfactants such as alkylglycosides, and amphoteric surfactants such as alkylbetaine amphoteric surfactants such as laurylbetaine, amidobetaine amphoteric surfactants such as lauroylamidopropylbetaine, imidazoline amphoteric surfactants such as 2-alkyl-N-carboxymethyl imidazolinium betaine and 2-alkyl-N-carboxyethyl imidazolinium betaine, alkylsulfobetaine amphoteric surfactants, amidosulfobetaine amphoteric surfactants such as coconut fatty acid amidodimethyl hydroxypropyl sulfobetaine, and β-alanine amphoteric surfactants such as N-alkyl- β-aminopropionate and N-alkyl- β-iminodipropioniate.

In addition, pH-adjusting agents such as ammonia and the like, corrosion inhibitors, antifoaming agents, bactericidal agents, perfumes, colorants, urethane resins, colloidal silica, fluorescent whiteners, UV absorbers can be also used as optional components.

Further, it is also preferred that the floor polish composition in accordance with the present invention contain substantially no polyvalent metal compounds (heavy metals) for metal crosslinking, such as zinc oxide, calcium oxide, calcium hydroxide, aluminum hydroxide, zinc carbonate ammonia, calcium carbonate ethylene diamine - ammonia, zinc acetate ammonia, zinc acrylate ammonia, zinc malate ammonia and alanine calcium ammonia. The polyvalent metals as referred to herein are metals with a valence of no less than two. Specific examples of such metals include beryllium, magnesium, calcium, strontium, iron, cobalt, nickel, zinc, manganese, copper, cadmium, lead, bismuth, barium, antimony and zirconium. Compounds of polyvalent metals are compounds containing those polyvalent metals.

Those polyvalent metal compounds have been contained in the conventional floor polish compositions and have been used to provide the performance such as improved endurance, water resistance, and removability by a mechanism of metal crosslinking of a metal and an acid component (e.g., methacrylic acid and acrylic acid) contained in the polymer (polymers of ethylenic unsaturated compounds) in the drying process after coating as polishing agents for floors. From the standpoint of environmental safety associated with increased concerns about environmental pollution, it is preferred that substantially no polyvalent metal compounds (heavy metals) be contained.

The content ratio of nonvolatiles, including the above-described optional components, in the floor polish composition in accordance with the present invention is preferably set at about 12-40 wt.%.

The preferred method for the manufacture of the floor polish composition comprises the steps of adding a plasticizer, a film formation enhancing agent, an alkali solubilizable resin, and a fluorine-containing surfactant to water, then adding the aqueous resin dispersion for floors in accordance with the present invention, and mixing a synthetic wax. Further, if necessary, optional components such as pH-adjusting agents such as ammonia, corrosion inhibitors, antifoaming agents, bactericidal agents, perfumes, colorants, urethane resins, colloidal silica, fluorescent whiteners and UV absorbers, can be added at an appropriate stage of the process.

The floor polish composition in accordance with the present invention is effective for application to a substrate, e.g., plastic floors such as vinyl floors and floors coated with synthetic resin, stone floors, cement floors and wood flooring. The floor polish composition in accordance with the present invention can be applied to the surface by the usual method such as spray coating, roller coating, brush coating, brushing and mopping. The floor polish composition can be used upon diluting with water or a solvent such as a water-miscible solvent, according to the apparatus specifications and coating conditions. The adjustment of other coating conditions such as temperature and humidity can be conducted with an appropriate drier, blower and air conditioner.

A removable protective film can be formed by drying the above-described substrate coated with the floor polish composition in accordance with the present invention, at normal temperature (5-35°C ± 5°C), preferably, at about 20-25°C. Means for water removal such as air blowing, heating, or both may be used appropriately in order to enhance the evaporation of water in the protective film formation process. As a result, the adjustment of protective film formation time is facilitated. However, heating means serves only for evaporating water, and heating is not a necessary condition for forming the protective film.

Examples

Specific features of the aqueous resin dispersion for floors in accordance with the present invention and the floor polish composition using such will be described based on the examples of the present invention and comparative examples. In the following description, the term "parts" stands for parts by weight and "%" - percent by weight. The present invention is not limited to those examples.

1. Aqueous resin dispersion for floors

(1) Preparation of aqueous resin dispersion for floors

A total of 60 parts of water and 0.5 part of sodium lauryl sulfate were placed in a reaction vessels equipped with a stirrer, a reflux cooler, two funnels, a thermometer,-and a nitrogen inlet tube and the temperature was raised to 85°C.

A total of 0.5 part of sodium lauryl sulfate and 35 parts of water were added to a mixture of monomers shown in Tables 1 through 4 and emulsification was conducted. The obtained monomer emulsions and 10 parts of 5% aqueous solution of ammonium persulfate were continuously dropwise added to a reaction vessel within 3 hours via separate dropping funnels and emulsion polymerization was conducted. Within 1 hour after completion of the dropwise addition, the system was cooled, polymerization was completed and an aqueous resin dispersion for floors was obtained.

Further, the monomer composition of each polymer, the number of weight parts, glass transition temperature (°C), acid value, and amount of nonvolatile components (%) are shown together.

In Tables 1 through 4, CHA stands for cyclohexyl acrylate, CHMA - cyclohexyl methacrylate, nBA - n-butyl acrylate, 2EHA - 2-ethylhexyl acrylate, AA - acrylic acid, MAA - methacrylic acid, MMA - methyl methacrylate, ST - styrene, Tg - glass transition temperature, AV - acid value, amount of nonvolatile compounds - effective amount of polymers in the aqueous resin dispersion for floors.

Table 1

|  |  | Aqueous resin dispersion for floors | | | | |
|---|---|---|---|---|---|---|
|  |  | 1 | 2 | 3 | 4 | 5 |
| a | CHA | 31.0 |  | 31.0 | 31.0 | 10.0 |
|  | CHMA |  | 45.0 |  |  |  |
| b | MAA | 10.0 | 15.0 | 15.0 | 19.3 | 15.0 |
|  | AA |  |  |  |  |  |
| c | nBA | 1.1.0 | 18.0 | 12.5 | 14.2 | 26.0 |
|  | 2EHA |  |  |  |  |  |
|  | MMA | 48.0 | 22.0 | 41.5 | 35.5 | 49.0 |
|  | ST |  |  |  |  |  |
| TOTAL |  | 100.0 | 100.0 | 100.0 | 100.0 | 100.0 |
| Tg (°C) |  | 57 | 57 | 57 | 57 | 47 |
| ACID VALUE |  | 65 | 98 | 98 | 126 | 98 |
| AMOUNT OF NON-VOLATILE COMPONENTS (%) |  | 40.0 | 40.0 | 40.0 | 40.0 | 40.0 |

Table 2

|  |  | Aqueous resin dispersion for floors | | | | |
|---|---|---|---|---|---|---|
|  |  | 6 | 7 | 8 | 9 | 10 |
| a | CHA | 26.0 |  | 31.0 | 31.0 | 50.0 |
|  | CHMA | 5.0 | 31.0 |  |  |  |
| b | MAA | 5.0 | 15.0 | 15.0 |  | 15.0 |
|  | AA | 5.0 |  |  | 7.7 |  |
| c | nBA | 10.0 |  | 9.0 | 7.5 | 5.0 |
|  | 2EHA |  | 19.0 |  |  |  |

Table continued

|  |  | Aqueous resin dispersion for floors | | | | |
|---|---|---|---|---|---|---|
|  |  | 6 | 7 | 8 | 9 | 10 |
|  | MMA | 49.0 | 35.0 | 45.0 | 53.8 | 30.0 |
|  | ST |  |  |  |  |  |
| TOTAL |  | 100.0 | 100.0 | 100.0 | 100.0 | 100.0 |
| Tg (°C) |  | 58 | 61 | 65 | 57 | 57 |
| ACID VALUE |  | 72 | 98 | 98 | 60 | 98 |
| AMOUNT OF NON-VOLATILE COMPONENTS (%) |  | 40.0 | 40.0 | 40.0 | 40.0 | 40.0 |

Table 3

|  |  | Aqueous resin dispersion for floors | | | | |
|---|---|---|---|---|---|---|
|  |  | 11 | 12 | 13 | 14 | 15 |
| a | CHA | 30.0 | 30.0 | 5.0 | 1.0 | 31.0 |
|  | CHMA |  |  |  |  |  |
| b | MAA | 20.5 | 22.0 | 15.0 | 16.0 | 19.3 |
|  | AA |  |  |  |  |  |
| c | nBA | 10.0 | 10.0 |  |  | 14.2 |
|  | 2EHA |  |  |  |  |  |
|  | MMA | 39.5 | 38.0 | 80.0 | 83.0 | 18.0 |
|  | ST |  |  |  |  | 17.5 |
| TOTAL |  | 100.0 | 100.0 | 100.0 | 100.0 | 100.0 |
| Tg (°C) |  | 67 | 68 | 114 | 119 | 56 |
| ACID VALUE |  | 134 | 143 | 98 | 104 | 126 |
| AMOUNT OF NON-VOLATILE COMPONENTS (%) |  | 40.0 | 40.0 | 40.0 | 40.0 | 40.0 |

Table 4

|  |  | Aqueous resin dispersion for floors | | | | |
|---|---|---|---|---|---|---|
|  |  | 16 | 17 | 18 | 19 | 20 |
| a | CHA |  |  |  |  |  |
|  | CHMA |  |  |  | 15 .0 |  |
| b | MAA | 19.3 | 8.5 | 24.0 | 16.0 | 15.0 |
|  | AA |  |  |  |  |  |
| c | nBA | 28.0 | 24.8 | 25.0 | 23.0 | 30.0 |
|  | 2EHA |  |  |  |  |  |
|  | MMA | 13.0 | 66.7 | 31.0 |  | 55.0 |
|  | ST | 39.7 |  | 20.0 | 46.0 |  |
| TOTAL |  | 100.0 | 100.0 | 100.0 | 100.0 | 100.0 |
| Tg (°C) |  | 53 | 53 | 63 | 55 | 47 |

Table continued

| | Aqueous resin dispersion for floors | | | | |
|---|---|---|---|---|---|
| | 16 | 17 | 18 | 19 | 20 |
| ACID VALUE | 126 | 55 | 126 | 104 | 98 |
| AMOUNT OF NON-VOLATILE COMPONENTS (%) | 40.0 | 40.0 | 40.0 | 40.0 | 40.0 |

Floor polish compositions of Example 1 through 18 and Comparative Examples 1 through 10 shown in Tables 5 through 9 were prepared by using polymers of the aqueous resin dispersion for floors shown in Tables 1 through 4, and each of the compositions was tested. The numerical values in the tables represent the content in wt.%, and the effective content of each component is presented in the footnotes.

Gloss, black heel mark (BHM) resistance, scuff resistance, storage stability, stain resistance, water resistance, removability, water resistance, and environmental safety of the floor polish compositions obtained were evaluated by the following test methods and evaluation criteria. The results are shown in Tables 10 through 14.

(1) Gloss

[Test Method]

In accordance with JIS K 3920 (Test Methods for Floor Polishes), samples of the floor polish compositions were coated three times on homogeneous vinyl tiles (manufactured by Tori K. K., Machiko S Plain No. 5626). The gloss of the coating dried for 1 hour was measured with a mirror surface gloss meter (manufactured by Nippon Denshoku Kogyo K. K., model PG-1M).

(2) Black heel mark (BHM) resistance

In accordance with JIS K 3920 (Test Methods for Floor Polishes), samples of the floor polish compositions were coated three times on homogeneous vinyl tiles (manufactured by Tori K. K., Machiko S Plain No. 5626). The coatings dried overnight at normal temperature were tested with a heel mark tester and evaluated visually according to 10 grades.

[Evaluation Criteria]

10: A very high BHM resistance is demonstrated.
6-9: An appropriate BHM resistance is demonstrated, the polish is suitable for practical use.
2-5: Poor BHM resistance, the polish is not suitable for practical use.
1: Very poor BHM resistance.

(3) Scuff resistance

In accordance with JIS K 3920 (Test Methods for Floor Polishes), the samples of the floor polish compositions were coated three times on homogeneous vinyl tiles (manufactured by Tori K.. K., Machiko S Plain No. 5626). The coatings dried overnight at normal temperature were tested with a heel mark tester and evaluated visually according to 10 grades.

[Evaluation Criteria]

10: A very high scuff resistance is demonstrated.
6-9: An appropriate scuff resistance is demonstrated, the polish is suitable for practical use.
2-5: Poor scuff resistance, the polish is not suitable for practical use.
1: Very poor scuff resistance.

(4) STORAGE STABILITY

In.accordance with JIS K 3920 (Test Methods for Floor Polishes), the floor polish compositions were placed into containers, sealed therein, and held for 14 days in a thermostat (manufactured by Isuzu Seisakusho K. K., model KAX-730) maintained at 50°C. The state of the samples was then visually evaluated according to the following criteria with respect to gelling, phase separation, precipitation of solids, and the like.

[Evaluation Criteria]

Conforms: No problems are observed.
Does not conform: Problems are observed.

(5) Stain resistance

The samples of the floor polish compositions were coated twice on flooring (manufactured by Asahi Woodtech Co., Ltd., SHG-6020MII) and dried overnight at normal temperature. Then, the detergents and condiments described below (diluted or as original liquids: a - j) were let fall in 0.1 mL drops on the floor and covered with a laboratory dish to prevent them from evaporating. Within 1 hour, the laboratory dish was removed, the liquid was soaked up with soft fabric, paper, or the like, and the state of the flooring tile surface was evaluated visually according to the following evaluation criteria.

a. Whitener for kitchens
(Commercial chlorine whitener comprising sodium hypochlorite and a sodium alkyl ether sulfate. The test is conducted by using an aqueous whitener solution prepared by dissolving 1 mL of the whitener in 1 L of water) .
b. Synthetic detergent for kitchen
(Commercial neutral detergent for kitchens comprising a sodium alkyl ether sulfate, an alkylamineoxide, a fatty acid alkanolamide, and a sodium $\alpha$-olefin sulfonate).
c. Synthetic detergent for washing
(Commercial powdered washing detergent comprising a straight-chain sodium alkylbenzene sulfonate, a polyoxyethylene alkyl ether, an aluminosilicate, a carbonate, a silicate, and a phosphate). The test is conducted by using an aqueous detergent solution prepared by dissolving 1 g of the detergent in 1 L of water).
d. Vinegar
e. Mayonnaise
f. Soy sauce
g. Salad oil
h. Japanese sake
i. Hair dye
j. Hair conditioner

[Evaluation Criteria]

Good: No whitening and peeling are observed.
Fair: Some whitening and peeling are observed.
Poor: Whitening and peeling.

(6) Removability

[Test Method]

In accordance with JIS K 3920 (Test Methods for Floor Polishes), the samples of the floor polish compositions were coated three times on composition tiles (manufactured by Tori K. K., New-Machiko No. 33) and dried for 7 days at a temperature of 50°C. The test was then conducted with a washability tester (Tester Sangyo Co., Ltd., model AB-504) by using a neutral stripping agent (Johnson Professional Co., Ltd., trade name Neutra Stripper). The results were evaluated visually according to the following evaluation criteria.
The test results obtained by using a 5-fold aqueous solution of Neutra Stripper are shown as removability (1) and the test results obtained by using a 10-fold aqueous solution of Neutra Stripper are shown as removability (2).

[Evaluation Criteria]

Very good: Can be removed completely.
Good: Can be removed almost completely.
Fair: Some film remains.

Poor: Practically cannot be removed.

(7) Water resistance

[Test Method]

In accordance with JIS K 3920 (Test Methods for Floor Polishes), the samples of the floor polish compositions were coated three times on composition vinyl tiles (manufactured by Tori K. K., New-Machiko V No. 33) and dried overnight under an atmosphere at a temperature of 38°C. Then, water was let fall in 0.1 mL drops. Within 1 hour, the whitening state of the composition vinyl tile surface was visually evaluated.

[Evaluation Criteria]

Conforms: No whitening is observed.
Does not conform: Whitening is observed.

(8) Adhesive properties

[Test Method]

A cellotape (trade name) adhesion test was conducted on the surface of specimens prepared by coating the samples of the floor polish compositions four times on homogeneous vinyl tiles (manufactured by Tori K. K., Machiko S Plain No. 5626) and drying for 1 hour at room temperature. The surface area (%) of remaining film averaged for five measurement cycles is shown. In the evaluation, adhesion to the floor surface subjected to conventional washing was reproduced.

(9) Environmental safety

[Test Method]

The evaluation was conducted based on the following evaluation criteria with respect to the presence of styrene and polyvalent metal compounds (heavy metals and the like) in the floor polish composition samples.

[Evaluation Criteria]

Good: Contains substantially none.
Poor: Contains.

Table 5

| | | | EXAMPLES | | | | | |
|---|---|---|---|---|---|---|---|---|
| | | | 1 | 2 | 3 | 4 | 5 | 6 |
| | | 1 | 35.00 | | 33.00 | 30.00 | 33.00 | |
| | | 2 | | 35.00 | | | | 32.00 |
| | | 3 | | | 2.00 | | | |
| | | 4 | | | | 5.00 | | |
| | | 5 | | | | | 2.00 | |
| | | 6 | | | | | | 3.00 |
| | | 7 | | | | | | |
| | | 8 | | | | | | |
| AQUEOUS | | 9 | | | | | | |
| RESIN | | 10 | | | | | | |
| DISPERSION | | 11 | | | | | | |

Table continued

|  | | EXAMPLES | | | | | |
|---|---|---|---|---|---|---|---|
|  | | 1 | 2 | 3 | 4 | 5 | 6 |
| FOR FLOORS | 12 | | | | | | |
| | 13 | | | | | | |
| | 14 | | | | | | |
| | 15 | | | | | | |
| | 16 | | | | | | |
| | 17 | | | | | | |
| | 18 | | | | | | |
| | 19 | | | | | | |
| | 20 | | | | | | |
| *1 | | | | | | | |
| *2 | | 1.00 | 1.00 | 1.00 | 1.00 | 1.00 | 1.00 |
| *3 | | 0.01 | 0.01 | 0.01 | 0.01 | 0.01 | 0.01 |
| *4 | | 7.00 | 7.00 | 7.00 | 7.00 | 7.00 | 7.00 |
| *5 | | 3.00 | 3.00 | 3.00 | 3.00 | 3.00 | 3.00 |
| *6 | | 1.50 | 1.50 | 1.50 | 1.50 | 1.50 | 1.50 |
| *7 | | 6.00 | 6.00 | 6.00 | 6.00 | 6.00 | 6.00 |
| *8 | | | | | | | |
| *9 | | | | | | | |
| DIETHANOLAMINE | | | | | | | |
| DEIONIZED WATER | | BALANCE | BALANCE | BALANCE | BALANCE | BALANCE | BALANCE |
| TOTAL | | 100.00 | 100.00 | 100.00 | 100.00 | 100.00 | 100.00 |

The components shown in the table are described below. This description also relates to Tables 6 through 9.

*1: Aqueous polyurethane resin (acid value about 98) composed of 4.9 parts of polypropylene glycol (molecular weight 1,000), 7.0 parts of dimethylolpropionic acid, 17.6 parts of dicylohexylmethane diisocyanate, 0.5 part hexamethylenediamine, 4.8 parts of triethylamine, 19.6 parts of N-methyl pyrrolidone, and 45.6 parts of distilled water.

*2: Fluorine-containing surfactant: S-100 (manufacture by Ciba Specialty Chemicals Co., Ltd., fluorine-containing surfactant: 1% aqueous solution) .

*3: Antifoaming agent: SE-21 (manufactured by WSC Co., Ltd., antifoaming agent, fineness 17%).

*4: Wax emulsion: High-Tech E-4000 (Toho Chemical Industry Co., Ltd., polyethylene wax emulsion, fineness 40%) .

*5: Alkali solubilizable resin: TOPCO LR400 (Toyo Petrolite Co., Ltd., rosin maleic acid solution, fineness 30%) .

*6: Plasticizer: tributoxyethyl phosphate (manufactured by Daihachi Chemical Industry Co., Ltd., a plasticizer).

*7: Film formation enhancing agent: diethylene glycol monoethyl ether.

*8: Crosslinking agent 1: aqueous solution of ammonium complex of zinc carbonate (content of zinc is 9.6%).

*9: Crosslinking agent 2: calcium carbonate.

Table 6

|  | | EXAMPLES | | | | | |
|---|---|---|---|---|---|---|---|
|  | | 7 | 8 | 9 | 10 | 11 | 12 |
| | 1 | | | | | | |

Table continued

| | | EXAMPLES | | | | | |
|---|---|---|---|---|---|---|---|
| | | 7 | 8 | 9 | 10 | 11 | 12 |
| AQUEOUS RESIN DISPERSION FOR FLOORS | 2 | 30.00 | 30.00 | 33.00 | 33.00 | 32.00 | 32.00 |
| | 3 | | | | | | |
| | 4 | | | | | | |
| | 5 | | | | | | |
| | 6 | | | | | | |
| | 7 | 5.00 | | | | | |
| | 8 | | 5.00 | | | | |
| | 9 | | | 2.00 | | | |
| | 10 | | | | 2.00 | | |
| | 11 | | | | | 3.00 | |
| | 12 | | | | | | 3.00 |
| | 13 | | | | | | |
| | 14 | | | | | | |
| | 15 | | | | | | |
| | 16 | | | | | | |
| | 17 | | | | | | |
| | 18 | | | | | | |
| | 19 | | | | | | |
| | 20 | | | | | | |
| *1 | | | | | | | |
| *2 | | 1.00 | 1.00 | 1.00 | 1.00 | 1.00 | 1.00 |
| *3 | | 0.01 | 0.01 | 0.01 | 0.01 | 0.01 | 0.01 |
| *4 | | 7.00 | 7.00 | 7.00 | 7.00 | 7.00 | 7.00 |
| *5 | | 3.00 | 3.00 | 3.00 | 3.00 | 3.00 | 3.00 |
| *6 | | 1.50 | 1.50 | 1.50 | 1.50 | 1.50 | 1.50 |
| *7 | | 6.00 | 6.00 | 6.00 | 6.00 | 6.00 | 6.00 |
| *8 | | | | | | | |
| *9 | | | | | | | |
| DIETHANOLAMINE | | | | | | | |
| DEIONIZED WATER | | BALANCE | BALANCE | BALANCE | BALANCE | BALANCE | BALANCE |
| TOTAL | | 100.00 | 100.00 | 100.00 | 100.00 | 100.00 | 100.00 |

Table 7

| | | EXAMPLES | | | | | |
|---|---|---|---|---|---|---|---|
| | | 13 | 14 | 15 | 16 | 17 | 18 |
| | 1 | | | 35.00 | | 30.00 | |
| | 2 | 32.00 | 32.00 | | 35.00 | | 32.00 |

Table continued

|  |  | EXAMPLES | | | | | |
|---|---|---|---|---|---|---|---|
|  |  | 13 | 14 | 15 | 16 | 17 | 18 |
| AQUEOUS RESIN DISPERSION FOR FLOORS | 3 |  |  |  |  |  |  |
|  | 4 |  |  |  |  | 5.00 |  |
|  | 5 |  |  |  |  |  |  |
|  | 6 |  |  |  |  |  | 3.00 |
|  | 7 |  |  |  |  |  |  |
|  | 8 |  |  |  |  |  |  |
|  | 9 |  |  |  |  |  |  |
|  | 10 |  |  |  |  |  |  |
|  | 11 |  |  |  |  |  |  |
|  | 12 |  |  |  |  |  |  |
|  | 13 | 3.00 |  |  |  |  |  |
|  | 14 |  | 3.00 |  |  |  |  |
|  | 15 |  |  |  |  |  |  |
|  | 16 |  |  |  |  |  |  |
|  | 17 |  |  |  |  |  |  |
|  | 18 |  |  |  |  |  |  |
|  | 19 |  |  |  |  |  |  |
|  | 20 |  |  |  |  |  |  |
| *1 |  |  |  |  |  |  |  |
| *2 |  | 1.00 | 1.00 | 1.00 | 1.00 | 1.00 | 1.00 |
| *3 |  | 0.01 | 0.01 | 0.01 | 0.01 | 0.01 | 0.01 |
| *4 |  | 7.00 | 7.00 | 7.00 | 7.00 | 7.00 | 7.00 |
| *5 |  | 3.00 | 3.00 |  |  |  |  |
| *6 |  | 1.50 | 1.50 | 1.50 | 1.50 | 1.50 | 1.50 |
| *7 |  | 6.00 | 6.00 | 6.00 | 6.00 | 6.00 | 6.00 |
| *8 |  |  |  |  |  |  |  |
| *9 |  |  |  |  |  |  |  |
| DIETHANOLAMINE |  |  |  |  |  |  |  |
| DEIONIZED WATER |  | BALANCE | BALANCE | BALANCE | BALANCE | BALANCE | BALANCE |
| TOTAL |  | 100.00 | 100.00 | 100.00 | 100.00 | 100.00 | 100.00 |

Table 8

|  |  | COMPARATIVE EXAMPLES | | | | | |
|---|---|---|---|---|---|---|---|
|  |  | 1 | 2 | 3 | 4 | 5 | 6 |
| AQUEOUS | 1 |  |  |  |  |  |  |
|  | 2 |  |  |  |  |  |  |
|  | 3 |  |  |  |  |  |  |

Table continued

| | | COMPARATIVE EXAMPLES | | | | | |
|---|---|---|---|---|---|---|---|
| | | 1 | 2 | 3 | 4 | 5 | 6 |
| | 4 | | | | | | |
| | 5 | | | | | | |
| | 6 | | | | | | |
| | 7 | | | | | | |
| | 8 | | | | | | |
| | 9 | | | | | | |
| RESIN DISPERSION FOR FLOORS | 10 | | | | | | |
| | 11 | | | | | | |
| | 12 | | | | | | |
| | 13 | | | | | | |
| | 14 | | | | | | |
| | 15 | 35.00 | | | | | |
| | 16 | | 35.00 | | | | |
| | 17 | | | 35.00 | | | |
| | 18 | | | | 35.00 | | |
| | 19 | | | | | 35.00 | |
| | 20 | | | | | | 35.00 |
| *1 | | | | | | | |
| *2 | | 1.00 | 1.00 | 1.00 | 1.00 | 1.00 | 1.00 |
| *3 | | 0.01 | 0.01 | 0.01 | 0.01 | 0.01 | 0.01 |
| *4 | | 7.00 | 7.00 | 7.00 | 7.00 | 7.00 | 7.00 |
| *5 | | 3.00 | 3.00 | 3.00 | 3.00 | 3.00 | 3.00 |
| *6 | | 1.50 | 1.50 | 1.50 | 1.50 | 1.50 | 1.50 |
| *7 | | 6.00 | 6.00 | 6.00 | 6.00 | 6.00 | 6.00 |
| *8 | | | | | | | |
| *9 | | | | | | | |
| DIETHANOLAMINE. | | | | | | | |
| DEIONIZED WATER | | BALANCE | BALANCE | BALANCE | BALANCE | BALANCE | BALANCE |
| TOTAL | | 100.00 | 100.00 | 100.00 | 100.00 | 100.00 | 100.00 |

Table 9

| | | COMPARATIVE EXAMPLES | | | |
|---|---|---|---|---|---|
| | | 7 | 8 | 9 | 10 |
| | 1 | | | | |
| | 2 | | | | |
| | 3 | | | | |
| | 4 | | | | |

Table continued

| | | COMPARATIVE EXAMPLES | | | |
|---|---|---|---|---|---|
| | | 7 | 8 | 9 | 10 |
| AQUEOUS RESIN DISPERSION FOR FLOORS | 5 | | | | |
| | 6 | | | | |
| | 7 | | | | |
| | 8 | | | | |
| | 9 | | | | |
| | 10 | | | | |
| | 11 | | | | |
| | 12 | | | | |
| | 13 | | | | |
| | 14 | | | | |
| | 15 | | | | |
| | 16 | | | | |
| | 17 | | | | |
| | 18 | 28.00 | | | |
| | 19 | | 37.30 | | 37.30 |
| | 20 | | | 10.00 | |
| *1 | | | | 33.33 | |
| *2 | | 0.50 | 3.60 | 0.60 | 3.60 |
| *3 | | | 0.02 | 0.01 | 0.02 |
| *4 | | 5.62 | 6.82 | 10.00 | 6.82 |
| *5 | | 2.50 | 3.00 | | |
| *6 | | 1.20 | 1.14 | 1.33 | 1.14 |
| *7 | | 4.80 | 3.33 | 4.00 | 3.33 |
| *8 | | | 3.00 | | 3.00 |
| *9 | | | | 0.35 | |
| DIETHANOLAMINE | | 8.00 | | | |
| DEIONIZED WATER | | BALANCE | BALANCE | BALANCE | BALANCE |
| TOTAL | | 100.00 | 100.00 | 100.00 | 100.00 |

Table 10

| | | EXAMPLE | | | | | |
|---|---|---|---|---|---|---|---|
| | | 1 | 2 | 3 | 4 | 5 | 6 |
| GLOSS DEGREE | | 80 | 82 | 80 | 80 | 81 | 81 |
| BHM RESISTANCE | | 6 | 6 | 6 | 6 | 6 | 6 |
| SCUFF RESISTANCE | | 6 | 6.5 | 6 | 6.5 | 6 | 6 |
| STORAGE STABILITY | | CONFORMS | CONFORMS | CONFORMS | CONFORMS | CONFORMS | CONFORMS |
| STAIN | a | GOOD | GOOD | GOOD | GOOD | GOOD | GOOD |
| RESISTANCE | b | GOOD | GOOD | GOOD | GOOD | GOOD | GOOD |
| | c | GOOD | GOOD | GOOD | GOOD | GOOD | GOOD |
| | d | GOOD | GOOD | GOOD | GOOD | GOOD | GOOD |
| | e | GOOD | GOOD | GOOD | GOOD | GOOD | GOOD |
| | f | GOOD | GOOD | GOOD | GOOD | GOOD | GOOD |
| | g | GOOD | GOOD | GOOD | GOOD | GOOD | GOOD |
| | h | GOOD | GOOD | GOOD | GOOD | GOOD | GOOD |
| | i | GOOD | GOOD | GOOD | GOOD | GOOD | GOOD |
| | j | GOOD | GOOD | GOOD | GOOD | GOOD | GOOD |
| WATER RESISTANCE | | CONFORMS | CONFORMS | CONFORMS | CONFORMS | CONFORMS | CONFORMS |
| REMOVABILITY | 1 | VERY GOOD | VERY GOOD | VERY GOOD | VERY GOOD | VERY GOOD | VERY GOOD |
| | 2 | GOOD | GOOD | GOOD | GOOD | GOOD | GOOD |
| ADHESIVE PROPERTIES | | 100 | 100 | 100 | 100 | 100 | 100 |
| ENVIRONMENTAL SAFETY | | GOOD | GOOD | GOOD | GOOD | GOOD | GOOD |
| TOTAL EVALUATION | | GOOD | GOOD | GOOD | GOOD | GOOD | GOOD |

Table 11

| | | EXAMPLE | | | | | |
|---|---|---|---|---|---|---|---|
| | | 7 | 8 | 9 | 10 | 11 | 12 |
| GLOSS DEGREE | | 79 | 81 | 82 | 81 | 80 | 80 |
| BHM RESISTANCE | | 6 | 6 | 6 | 6 | 6 | 6 |
| SCUFF RESISTANCE | | 6.5 | 6 | 6 | 5-5 | 5.5 | 5.5 |
| STORAGE STABILITY | | CONFORMS | CONFORMS | CONFORMS | CONFORMS | CONFORMS | CONFORMS |
| STAIN RESISTANCE | a | GOOD | GOOD | GOOD | GOOD | GOOD | GOOD |
| | b | GOOD | GOOD | GOOD | GOOD | GOOD | GOOD |
| | c | GOOD | GOOD | GOOD | GOOD | GOOD | GOOD |
| | d | GOOD | GOOD | GOOD | GOOD | GOOD | GOOD |
| | e | GOOD | GOOD | GOOD | GOOD | GOOD | GOOD |
| | f | GOOD | GOOD | GOOD | GOOD | GOOD | GOOD |
| | g | GOOD | GOOD | GOOD | GOOD | GOOD | GOOD |
| | h | GOOD | GOOD | GOOD | GOOD | GOOD | GOOD |
| | i | GOOD | GOOD | GOOD | GOOD | GOOD | GOOD |
| | j | GOOD | GOOD | GOOD | GOOD | GOOD | GOOD |
| WATER RESISTANCE | | CONFORMS | CONFORMS | CONFORMS | CONFORMS | CONFORMS | CONFORMS |
| REMOVABILITY | 1 | VERY GOOD | VERY GOOD | VERY GOOD | VERY GOOD | VERY GOOD | VERY GOOD |
| | 2 | GOOD | GOOD | GOOD | GOOD | GOOD | GOOD |
| ADHESIVE PROPERTIES | | 100 | 100 | 100 | 100 | 100 | 100 |
| ENVIRONMENTAL SAFETY | | GOOD | GOOD | GOOD | GOOD | GOOD | GOOD |
| TOTAL EVALUATION | | GOOD | GOOD | GOOD | GOOD | GOOD | GOOD |

Table 12

| | | EXAMPLE | | | | | |
|---|---|---|---|---|---|---|---|
| | | 13 | 14 | 15 | 16 | 17 | 18 |
| GLOSS DEGREE | | 79 | 76 | 80 | 83 | 81 | 81 |
| BHM RESISTANCE | | 6 | 6 | 6 | 6 | 6 | 6 |
| SCUFF RESISTANCE | | 5.5 | 6 | 6 | 6.5 | 6.5 | 6 |
| STORAGE STABILITY | | CONFORMS | CONFORMS | CONFORMS | CONFORMS | CONFORMS | CONFORMS |
| STAIN RESISTANCE | a | GOOD | GOOD | GOOD | GOOD | GOOD | GOOD |
| | b | GOOD | GOOD | GOOD | GOOD | GOOD | GOOD |
| | c | GOOD | GOOD | GOOD | GOOD | GOOD | GOOD |
| | d | GOOD | GOOD | GOOD | GOOD | GOOD | GOOD |
| | e | GOOD | GOOD | GOOD | GOOD | GOOD | GOOD |
| | f | GOOD | GOOD | GOOD | GOOD | GOOD | GOOD |
| | g | GOOD | GOOD | GOOD | GOOD | GOOD | GOOD |
| | h | GOOD | GOOD | GOOD | GOOD | GOOD | GOOD |
| | i | GOOD | GOOD | GOOD | GOOD | GOOD | GOOD |
| | j | GOOD | GOOD | GOOD | GOOD | GOOD | GOOD |
| WATER RESISTANCE | | CONFORMS | CONFORMS | CONFORMS | CONFORMS | CONFORMS | CONFORMS |
| REMOVABILITY | 1 | VERY GOOD | VERY GOOD | VERY GOOD | VERY GOOD | VERY GOOD | VERY GOOD |
| | 2 | GOOD | GOOD | GOOD | GOOD | GOOD | GOOD |
| ADHESIVE PROPERTIES | | 100 | 95 | 100 | 100 | 100 | 100 |
| ENVIRONMENTAL SAFETY | | GOOD | GOOD | GOOD | GOOD | GOOD | GOOD |
| TOTAL EVALUATION | | GOOD | GOOD | GOOD | GOOD | GOOD | GOOD |

Table 13

| | | COMPARATIVE EXAMPLE | | | | | |
|---|---|---|---|---|---|---|---|
| | | 1 | 2 | 3 | 4 | 5 | 6 |
| GLOSS DEGREE | | 83 | 86 | 70 | 77 | 88 | 71 |
| BHM RESISTANCE | | 6 | 6 | 5 | 6 | 7 | 6 |
| SCUFF RESISTANCE | | 6 | 5.5 | 5 | 6 | 7 | 6 |
| STORAGE STABILITY | | CONFORMS | CONFORMS | CONFORMS | CONFORMS | CONFORMS | CONFORMS |
| STAIN RESISTANCE | a | GOOD | POOR | POOR | POOR | POOR | POOR |
| | b | GOOD | GOOD | GOOD | POOR | GOOD | POOR |
| | c | POOR | POOR | POOR | POOR | POOR | POOR |
| | d | GOOD | GOOD | GOOD | GOOD | GOOD | GOOD |
| | e | GOOD | GOOD | GOOD | GOOD | GOOD | GOOD |
| | f | GOOD | GOOD | GOOD | GOOD | GOOD | GOOD |
| | g | GOOD | GOOD | GOOD | GOOD | GOOD | GOOD |
| | h | GOOD | GOOD | GOOD | GOOD | GOOD | GOOD |
| | i | GOOD | GOOD | GOOD | GOOD | GOOD | GOOD |
| | j | GOOD | GOOD | GOOD | GOOD | GOOD | GOOD |
| WATER WATER RESISTANCE | | CONFORMS | CONFORMS | CONFORMS | CONFORMS | CONFORMS | CONFORMS |
| REMOVABILITY | 1 | GOOD | FAIR | FAIR | GOOD | FAIR | GOOD |
| | 2 | FAIR | POOR | POOR | FAIR | POOR | FAIR |
| ADHESIVE PROPERTIES | | 100 | 50 | 40 | 70 | 100 | 50 |
| ENVIRONMENTAL SAFETY | | POOR | POOR | GOOD | POOR | POOR | GOOD |
| TOTAL EVALUATION | | POOR | POOR | POOR | POOR | POOR | POOR |

Table 14

| | | COMPARATIVE EXAMPLE | | | |
|---|---|---|---|---|---|
| | | 7 | 8 | 9 | 10 |
| GLOSS DEGREE | | 75 | 88 | 72 | 88 |
| BHM RESISTANCE | | 6 | 7 | 6 | 7 |
| SCUFF RESISTANCE | | 6 | 7 | 6 | 7 |
| STORAGE STABILITY | | DOES NOT CONFORM | CONFORMS | CONFORMS | CONFORMS |
| STAIN RESISTANCE | a | POOR | POOR | POOR | POOR |
| | b | GOOD | GOOD | POOR | GOOD |
| | c | POOR | POOR | POOR | POOR |
| | d | GOOD | GOOD | GOOD | GOOD |
| | e | GOOD | GOOD | GOOD | GOOD |
| | f | GOOD | GOOD | GOOD | GOOD |
| | g | GOOD | GOOD | GOOD | GOOD |
| | h | GOOD | GOOD | GOOD | GOOD |
| | i | GOOD | GOOD | GOOD | GOOD |
| | j | GOOD | GOOD | GOOD | GOOD |
| WATER RESISTANCE | | CONFORMS | CONFORMS | CONFORMS | CONFORMS |
| REMOVABILITY | 1 | GOOD | FAIR | GOOD | POOR |
| | 2 | FAIR | POOR | FAIR | POOR |
| ADHESIVE PROPERTIES | | 70 | 100 | 50 | 100 |
| ENVIRONMENTAL SAFETY | | POOR | POOR | GOOD | POOR |
| TOTAL EVALUATION | | POOR | POOR | POOR | POOR |

The evaluation results obtained in Examples 1 to 18 make it apparent that the floor polish composition in accordance with the present invention demonstrates good results for all the test items: gloss, black heel mark (BHM) resistance, scuff resistance, storage stability, stain resistance, water resistance, removability, adhesive properties, and environmental safety. Furthermore, it is clear that the floor polish composition in accordance with the present invention demonstrates good results for all the test items even when it contains no alkali solubilizable resin, as in Examples 15 to 18.

On the other hand, Comparative Examples 1 and 5 relate to the case in which the aqueous resin dispersions for floors comprise ST (styrene), while comprising a vinyl monomer with an alicyclic structure, which is the monomer (a), and it is clear that those compositions have degraded removability and environmental safety and also a slightly degraded stain resistance.

Further, Comparative Examples 2 and 4 relate to the case in which the aqueous resin dispersions for floors comprise ST (styrene), while comprising no vinyl monomer with an alicyclic structure, which is the monomer (a), and it is clear that those compositions have degraded stain resistance, removability, adhesive properties, and environmental safety.

The composition of Comparative Example 4 has removability and adhesive properties improved over those of the composition of Comparative Example 2, but the stain resistance thereof is degraded and it is clear that the total evaluation of this composition cannot be considered satisfactory.

Further, Comparative Examples 3 and 6 relate to the case in which the aqueous resin dispersions for floors contain no vinyl monomer with an alicyclic structure, which is the monomer (a), and no ST (styrene), and it is clear that those compositions have degraded gloss, stain resistance, removability, and adhesive properties.

The composition of Comparative Example 6 has removability and adhesive properties improved over those of the composition of Comparative Example 3, but stain resistance thereof is degraded and it is clear that the total evaluation of this composition cannot be considered satisfactory.

Comparative Example 7 relates to the case in which the aqueous resin dispersion for floors contains no vinyl monomer with an alicyclic structure, which is the monomer (a), comprises ST (styrene) and is crosslinked by amine compounds (equivalent to Examples 2 of Japanese Patent Application Laid-open No. 2001-2980). It is clear that this dispersion has poor stain resistance, removability, adhesive properties, and environmental safety.

Comparative Example 8 relates to the case in which the aqueous resin dispersion comprises a vinyl monomer with an alicyclic structure, which is the monomer (a), and ST (styrene) and is crosslinked by zinc (equivalent to Example 2 of Japanese Patent Application Laid-open No. 2000-290596). It is clear that this dispersion has poor removability and environmental safety and also slightly degraded stain resistance.

Comparative Example 9 relates to the case in which the aqueous resin dispersion comprises a vinyl monomer with an alicyclic structure, which is the monomer (a), and ST (styrene) and is crosslinked by calcium (equivalent to Example 3 of Japanese Patent Application Laid-open No. H8-92529). It is clear that this dispersion has poor stain resistance, removability and adhesive properties.

Comparative Example 10 relates to the case in which the alkali solubilizable resin was removed from the conventional formulation shown in Comparative Example 8. It is clear that removability and environmental safety are degraded, in particular, removability is further degraded with respect to that of Comparative Example 8. In other words, an alkali solubilizable resin can be considered as a mandatory ingredient of the conventional floor polish compositions.

The present invention provides an aqueous resin dispersion composed of specific monomer units and a floor polish composition using same. The composition can be advantageously used on substrates such as plastic floors including vinyl floors and floors coated with synthetic resins, stone floors, cement floors and flooring (wood floors).

The present invention can provide a floor polish composition with excellent gloss, black heel mark (BHM) resistance, scuff resistance, and storage stability, in particular, having removability, adhesive properties, stain resistance, and water resistance. Because the composition uses no aromatic vinyl monomers for the aqueous resin dispersion for floors, the composition has no effects such as sick house syndrome, and because no metal crosslinking is used, the composition has excellent environmental safety.

Further, the floor polish composition in accordance with the present invention can be stripped easily and within a short time by using neutral stripping detergents, without using alkaline stripping detergent compositions, and when coated on flooring, has excellent stain resistance, for example, to condiments and detergents used in kitchens, thereby preventing the floor from damage.

**Claims**

1. An aqueous resin dispersion for floors in which a copolymer comprising the monomer units (a), (b), and (c) as the structural units is dispersed in water, wherein the content ratios of each monomer in said aqueous resin dispersion for floors, based on the total amount of all the monomers, are:

   (a) 1 to 70 wt.% vinyl monomer units with an alicyclic structure;
   (b) 5 to 50 wt.% vinyl monomer units with carboxyl groups; and
   (c) 5 to 90 wt.% non-aromatic vinyl monomer units other than (a) and (b) above.

2. The aqueous resin dispersion for floors according to claim 1, wherein the monomer unit (a) comprises at least one compound selected from cyclohexyl methacrylate and cyclohexyl acrylate.

3. A floor polish composition comprising an aqueous resin dispersion for floors in which a copolymer comprising the monomer units (a), (b), and (c) as the structural units is dispersed in water, wherein the content ratios of each monomer in the aqueous resin dispersion for floors, based on the total amount of all the monomers, are:

   (a) 1 to 70 wt.% vinyl monomer units with an alicyclic structure;
   (b) 5 to 50 wt.% vinyl monomer units with carboxyl groups; and
   (c) 5 to 90 wt.% non-aromatic vinyl monomer units other than (a) and (b) above, and

   said copolymer is not metal crosslinked.

4. The floor polish composition according to claim 3, wherein said aqueous resin dispersion for floors comprises at least one compound selected from cyclohexyl methacrylate and cyclohexyl acrylate as the monomer component (a).

5. The floor polish composition according to claim 3, wherein the glass transition temperature (Tg) of said aqueous resin dispersion for floors is in the range of 40 to 115°C and the acid value (Av) thereof is in the range of 60 to 150.

**6.** The floor polish composition according to claim 4, wherein the glass transition temperature (Tg) of said aqueous resin dispersion for floors is in the range of 40 to 115°C and the acid value (Av) thereof is in the range of 60 to 150.

**7.** The floor polish composition according to claim 3, which is used for flooring.

**8.** The floor polish composition according to claim 4, which is used for flooring.

**9.** The floor polish composition according to claim 5, which is used for flooring.

**Patentansprüche**

**1.** Wässrige Harzdispersion für Fußböden, in der ein Copolymer, das die Monomereinheiten (a), (b) und (c) als Struktureinheit umfasst, in Wasser dispergiert ist, und worin die Bestandteilverhältnisse eines jeden Monomers in dieser wässrigen Harzdispersion für Fußböden, bezogen auf die Gesamtmenge aller Monomere, wie folgt sind:

    (a) 1 bis 70 Gew.-% Vinylmonomereinheiten mit einer alicylischen Struktur;
    (b) 5 bis 50 Gew.-% Vinylmonomereinheiten mit Carboxylgruppen; und
    (c) 5 bis 90 Gew.-% nicht-aromatische Vinylmonomereinheiten, die sich von den oben genannten (a) und (b) unterscheiden.

**2.** Wässrige Harzzusammensetzung für Fußböden nach Anspruch 1, worin die Monomereinheit (a) mindestens eine Verbindung umfasst, die aus Cyclohexylmethacrylat und Cyclohexylacrylat ausgewählt ist.

**3.** Fußbodenpoliturzusammensetzung, umfassend eine wässrige Harzdispersion für Fußböden, in der ein Copolymer, das die Monomereinheiten (a), (b) und (c) als Struktureinheiten enthält, in Wasser dispergiert ist, und worin die Bestandteilverhältnisse eines jeden Monomers in der wässrigen Harzdispersion für Fußböden, bezogen auf die Gesamtmenge aller Monomere, wie folgt sind:

    (a) 1 bis 70 Gew.-% Vinylmonomereinheiten mit einer alicyclischen Struktur,
    (b) 5 bis 50 Gew.-% Vinylmonomereinheiten mit Carboxylgruppen; und
    (c) 5 bis 90 Gew.-% nicht-aromatische Vinyleinheiten, die sich von den oben genannten (a) und (b) unterscheiden, und das Copolymer nicht metallvernetzt ist.

**4.** Fußbodenpoliturzusammensetzung nach Anspruch 3, worin die wässrige Harzdispersion für Fußböden mindestens eine Verbindung umfasst, die aus Cyclohexylmethacrylat und Cyclohexylacrylat als Monomerkomponente (a) ausgewählt ist.

**5.** Fußbodenpoliturzusammensetzung nach Anspruch 3, worin die Glasübergangstemperatur (Tg) der wässrigen Harzdispersion für Fußböden im Bereich von 40 bis 115 °C und deren Säurezahl (SZ) im Bereich von 60 bis 150 liegt.

**6.** Fußbodenpoliturzusammensetzung nach Anspruch 4, worin die Glasübergangstemperatur (Tg) der wässrigen Harzdispersion für Fußböden im Bereich von 40 bis 115 °C und deren Säurezahl (SZ) im Bereich von 60 bis 150 liegt.

**7.** Fußbodenpoliturzusammensetzung nach Anspruch 3, die für Fußbodenbeläge verwendet wird.

**8.** Fußbodenpoliturzusammensetzung nach Anspruch 4, die für Fußbodenbeläge verwendet wird.

**9.** Fußbodenpoliturzusammensetzung nach Anspruch 5, die für Fußbodenbeläge verwendet wird.

**Revendications**

**1.** Dispersion de résine aqueuse pour sols dans laquelle un copolymère comprenant les motifs monomères (a), (b), et (c) à titre de motifs structuraux est dispersé dans l'eau, les taux de teneurs de chaque monomère dans ladite dispersion de résine aqueuse pour sols, basés sur la quantité totale de tous les monomères, étant :

    (a) de 1 à 70 % en poids de motifs monomères de vinyle avec une structure alicyclique ;

(b) de 5 à 50 % en poids de motifs monomères de vinyle avec des groupes carboxyle ; et

(c) de 5 à 90 % en poids de motifs monomères de vinyle non aromatiques autres que (a) et (b) ci-dessus.

2. Dispersion de résine aqueuse pour sols selon la revendication 1, dans laquelle le motif monomère (a) comprend au moins un composé choisi parmi le méthacrylate de cyclohexyle et l'acrylate de cyclohexyle.

3. Composition d'encaustique pour sols comprenant une dispersion de résine aqueuse pour sols dans laquelle un copolymère comprenant les motifs monomères (a), (b), et (c) à titre de motifs structuraux est dispersé dans l'eau, les taux de teneurs de chaque monomère dans ladite dispersion de résine aqueuse pour sols, basés sur la quantité totale de tous les monomères, étant :

(a) de 1 à 70 % en poids de motifs monomères de vinyle avec une structure alicyclique ;

(b) de 5 à 50 % en poids de motifs monomères de vinyle avec des groupes carboxyle ; et

(c) de 5 à 90 % en poids de motifs monomères de vinyle non aromatiques autres que (a) et (b) ci-dessus, et

ledit copolymère n'est pas réticulé par un métal.

4. Composition d'encaustique pour sols selon la revendication 3, dans laquelle ladite dispersion de résine aqueuse pour sols comprend au moins un composé choisi parmi le méthacrylate de cyclohexyle et l'acrylate de cyclohexyle à titre du composant monomère (a).

5. Composition d'encaustique pour sols selon la revendication 3, dans laquelle la température de transition vitreuse (Tg) de ladite dispersion de résine aqueuse pour sols est dans la plage de 40 à 115°C et son indice d'acide (Av) est dans la plage de 60 à 150.

6. Composition d'encaustique pour sols selon la revendication 4, dans laquelle la température de transition vitreuse (Tg) de ladite dispersion de résine aqueuse pour sols est dans la plage de 40 à 115°C et son indice d'acide (Av) est dans la plage de 60 à 150.

7. Composition d'encaustique pour sols selon la revendication 3, qui est utilisée pour le revêtement de sols.

8. Composition d'encaustique pour sols selon la revendication 4, qui est utilisée pour le revêtement de sols.

9. Composition d'encaustique pour sols selon la revendication 5, qui est utilisée pour le revêtement de sols.